# EUROPÄISCHE PATENTSCHRIFT

(11) **EP 1 646 582 B1**
(45) Veröffentlichungstag und Bekanntmachung des Hinweises auf die Patenterteilung: **29.10.2008**
(21) Anmeldenummer: 04738916.8
(22) Anmeldetag: 16.07.2004
(51) Int. Cl.: C01F 7/36, C01F 7/44, B01J 21/04

(54) **Verfahren zur Herstellung von Aluminiumtrihydraten mit hohem Porenvolumen**
Method for producing aluminium trihydrates having a high pore volume
Procédé de production de trihydrates d'aluminium à volume poreux élevé

(30) Priorität: 17.07.2003 DE 10332776
(43) Veröffentlichungstag der Anmeldung: 19.04.2006
(73) Patentinhaber: SASOL Germany GmbH, 20537 Hamburg (DE)
(72) Erfinder: BRASCH, Andrea, 25704 Meldorf (DE); DÖLLING, Kai, 25587 Münsterdorf (DE)
(74) Vertreter: Schupfner, Georg
(86) Internationale Anmeldenummer: PCT/DE2004/001545
(87) Internationale Veröffentlichungsnummer: WO 2005/009904

(56) Entgegenhaltungen:
- EP-A- 1 193 232
- WO-A-95/12547
- WO-A-96/34829
- DE-A- 2 446 094
- DE-A- 4 344 304
- US-A- 2 917 365
- US-A- 4 117 106
- CHEMICAL ABSTRACTS, Bd. 114, Nr. 16, 22. April 1991 (1991-04-22), Columbus, Ohio, US; abstract no.: 146327f, Y. OZAKI ET AL.: "Manufacture of porous spherical alumina particles" Seite 165 XP000186727 & JP 02 302315 A (NICHIAS CORP.) 14. Dezember 1990 (1990-12-14)
- DATABASE CA [Online] CHEMICAL ABSTRACTS SERVICE, COLUMBUS, OHIO, US; VIOLANTE, A. ET AL: "Influence of pH, concentration, and chelating power of organic anions on the synthesis of aluminum hydroxides and oxyhydroxides" XP002332617 gefunden im STN Database accession no. 94:18406 & CLAYS AND CLAY MINERALS , 28(6), 425-34 CODEN: CLCMAB; ISSN: 0009-8604, 1980,
- SOUZA SANTOSA P. ET AL.: 'Standard Transition Aluminas. Electron Microscopy Studies' MATERIALS RESEARCH Bd. 3, Nr. 4, 2000, Seiten 104 - 114

## Beschreibung

Gegenstand der Erfindung ist ein Verfahren zur Herstellung von Aluminiumtrihydraten Al(OH)₃ durch Hydrolyse von Aluminiumalkoholaten in wässriger, alkalischer Lösung unter Zusatz organischer Verbindungen. Die so hergestellten Aluminiumtrihydratkönnen, als Katalysatorträger verwendet werden.
Allgemein sind drei Aluminiumtrihydroxid-Modifikationen, im Folgenden "Aluminiumtrihydrat" genannt, bekannt: α-Al(OH)₃, β-Al(OH)₃ und γ-Al(OH)₃.

α-Al(OH)₃ (Hydrargillit, Gibbsit) ist Bestandteil natürlich in großen Mengen vorkommender Bauxit-Vorkommen. Es findet industriell hauptsächlich Anwendung als Einsatzprodukt technischer Reinheit bei der Gewinnung von Aluminium (Bauxit-Aufschluss) und als preiswertes Ausgangsprodukt zur Herstellung von Natriumaluminat. Aufgrund der hohen Verunreinigungen ist natürlich vorkommendes Bauxit nicht als Katalysatorträger geeignet.

β-Al(OH)₃, bekannter als Bayerit, kann durch Salzfällung aus Aluminium-Sulfat-und Natriumaluminatlösung oder durch Hydrolyse von Aluminiumalkoholat hergestellt werden. Die letztere Variante ist geeignet, hochreines Bayerit herzustellen, während aus der Salzfällung Natrium- und Sulfat-verunreinigte Produkte anfallen. Der hochreine Bayerit und seine durch Kalzinierung entstehenden Folgeprodukte finden industriell in der Katalysatorträgerherstellung Anwendung. Auf Grund des kristallinen Charakters (Kristallitgröße 30 bis 40 nm gemessen am 311-Reflex) ist dieses Material nicht dispergierbar und somit schwer zu pastösen Massen für die Extrudatherstellung, wie sie bei der Katalysatorträgerherstellung eingesetzt werden, verarbeitbar.

Die Herstellung von γ-Al(OH)₃, auch Nordstrandit genannt, ist ebenfalls bekannt. Auf- grund nur geringer Unterschiede in den physikalischen Merkmalen zum Bayerit hat der Nordstrandit keine besondere technische Bedeutung. Hinzu kommt, dass die Synthese aufgrund hoher Waschwassermengen umwelttechnisch bedenklich und durch die Synthesedauer von mehr als 3 Tagen unwirtschaftlich ist.

Aluminiumhydroxide werden u.A. durch Fällung aus wässrigen Lösungen unter Einsatz eines Fällungshilfsmittels hergestellt. So beschreibt die US 5,928,127 die Fällung eines Aluminiumoxid-Sols aus einer wässrigen Lösung unter Zusatz von Sulfonsäuren.

Aus der DE 195 22 946 ist weiterhin ein Verfahren zur Herstellung eines feinteiligen Aluminiumhydroxids durch Umsetzung von Aluminiumalkoxiden mit weiteren Metallalkoxiden bei hohen Rührerscherraten bekannt.

Violante, A.und Violante, P. in " Clays and Clay minerals", 1980, Band 28, Nr. 6, Seiten 425-434 beschreiben ein Verfahren zur Herstellung von Aluminiumtrihydrat aus Al(Cl)₃ in Gezenwart von Glycin und Asparaginsaüre.

Die bisher bekannten Verfahren zur Herstellung von Aluminuimhydroxiden haben den Nachteil, dass die erhaltenen Aluminiumhydroxide keine ausreichende Reinheit zur Herstellung von Katalysatorträgern aufweisen oder nicht in einheitlicher Modifikation vorliegen.

Aufgabe der vorliegenden Erfindung ist es, ein Verfahren zur Herstellung von A-luminiumtrihydroxiden (Aluminiumtrihydraten) Al(OH)₃ bereitzustellen, die ein hohes Porenvolumen von größer 0,6 ml/g, bevorzugt größer 0,8 ml/g (bestimmt anhand der N₂-Sorption), besonders bevorzugt von größer 1,0 ml/g, und niedrigere Kristallitgrößen bei hoher Reinheit, z.B. von kleiner 40 ppm Natrium und kleiner 50 ppm Sulfat, aufweisen. Die so hergestellten Aluminiumtrihydroxide können als Katalysatorträger verwendet werden.

Diese Aufgabe wird durch ein Verfahren gemäß Anspruch 1 gelöst, bevorzugte Ausführungsformen sind Gegenstand der Unteransprüche oder nachfolgend beschrieben.

Die beiden Parameter hohes Porenvolumen und niedrige Kristallitgröße sind bislang bei natürlich vorkommenden oder industriell hergestellten Aluminiumtrihydraten nicht beschrieben. Der Zugang zu diesen neuartigen Verbindungen ist von großer Bedeutung für die Weiterentwicklung von Katalysatorträgern.

Gegenstand der Erfindung ist ein Verfahren zur Herstellung von hochreinen Aluminiumtrihydraten Al(OH)₃ durch Hydrolyse von Aluminiumalkoholaten, wobei diese zumindest einen Alkoholatrest, vorzugsweise 3 Alkoholatreste, aufweisen und die Alkoholatreste vorzugsweise 1 bis 24, besonders bevorzugt 4 bis 8, Kohlenstoffatome aufweisen, in wässriger, alkalischer Lösung unter Zusatz organischer Verbindungen, welche zumindest eine Carboxyl- und zumindest eine Amin-Gruppe und vorzugsweise zusätzlich zumindest eine Hydroxyl-Gruppe aufweisen. Vorzugsweise ist die organische Verbindung eine Aminosäure der allgemeinen Formel I bzw. dessen Salz: 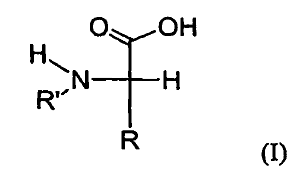 mit
R gleich H oder ein Kohlenwasserstoffrest mit 1 bis 20
Kohlenstoffatomen und ggf. weiteren funktionellen Gruppen,
z.B. ein oder zwei,
R' gleich H, oder
   C1- bis C5-Alkyl, ggf. weitere funktionelle Gruppen,
   z.B. ein oder zwei, tragend.

Vorzugsweise weist der Rest R der Aminosäure eine Hydroxylgruppe -OH auf. Besonders bevorzugt werden als Aminosäuren L-Serin, Asparginsäure, Glycin oder L-Leucin eingesetzt.

Soweit die erfindungsgemäß eingesetzten organischen Verbindungen als Salz vorliegen, sind die Ammoniumsalze, einschließlich z.B. der Alkanolammoniumsalze bevorzugt.

Erfindungsgemäß liegt die organische Verbindung in der Hydrolysevorlage bevorzugt in Mengen von 0,1 bis 1 Gew.-%, besonders bevorzugt 0,2 bis 0,3 Gew.-% vor, berechnet als freie Säure und bezogen auf die Gesamtmasse der eingesetzten wässrigen Hydrolysevorlage.

Die nach dem erfindungsgemäßen Verfahren hergestellten Aluminiumtrihydrate liegen vorzugsweise als α-Al(OH)₃ oder als γ-Al(OH)₃ vor, d.h. sie weisen bevorzugt eine Gibbsit- oder Nordstrandit- Struktur auf.

Die Hydrolyse wird erfindungsgemäß bei Temperaturen zwischen 0°C und 60°C, vorzugsweise zwischen 20°C und 60°C und besonders bevorzugt bei 30°C bis 40°C durchgeführt. Die wässrige, alkalische Lösung weist dabei vorzugsweise einen pH-Wert von 8 bis 13, insbesondere von 9 bis 12 auf.

Die nach dem erfindungsgemäßen Verfahren hergestellten Aluminiumtrihydrate haben bevorzugt ein Porenvolumen von 0,6 bis 1,5 ml/g, vorzugsweise 0,8 bis 1,1 ml/g.

Das erfindungsgemäße Verfahren ermöglicht die Synthese Nordstrandit-und Gibbsit-ähnlicher Trihydrate durch Hydrolyse von Aluminiumalkaholaten in wässriger, alkalischer Lösung unter Zusatz organischer Verbindungen, welche zumindest eine Carboxyl- und eine Amin-Gruppe aufweisen. Besonders geeignet sind Aminosäuren.

Beim Einsatz verschiedener Aminosäuren zeigen sich Zusammenhänge zwischen der Beschaffenheit der Seitengruppe der eingesetzten Aminosäure und dem erhaltenen Trihydrat. In vielen Synthesen wird ein Gemisch aus Bayerit, Gibbsit und Nordstrandit, erhalten, i.d.R. werden aber nach dem erfindungsgemäßen Verfahren Gibbsit und/oder Nordstrandit gebildet.

Die Anwesenheit von Aminosäure-Verbindungen führt zu Aluminiumtrihydraten mit erhöhtem Porenvolumen. Aminosäuren wie L-Leucin, Glycin, L-Serin, L-Threonin, L-Asparaginsäure, L-Glutaminsäure, L-Cystein sowie deren Dimer Cystin und Homocystein führten zur Bildung von Nordstrandit- und/oder Gibbsitähnlichen Materialien.

Bei der Verwendung von L-Leucin (Seitengruppe -CH₂-CH-(CH₃)₂) in der Hydrolysevorlage wird ein Trihydrat mit Gibbsit-Struktur gefällt. Gleiches gilt für L-Cystein, dem Dimer des Cysteins und Homocystein in der Hydrolysevorlage.

Dagegen können Glycin oder Aminosäuren mit einer hydroxid-haltigen Seitengruppe (L-Serin: R = -CH₂-OH, Asparaginsäure: R = -CH₂-COOH) bevorzugt zur Fällung der Nordstrandit-Form eingesetzt werden. Glycin, L-Serin, Asparaginsäure und L-Threonin führen bevorzugt zur Fällung in der Nordstrandit-Form.

Eine Erhöhung der Aminosäuremenge in der Hydrolysevorlage kann die Trihydrat-Fällung bis zur völligen Unterdrückung zugunsten einer amorphen Böhmitbildung behindern. Eine weitere Verminderung der Aminosäuremenge begünstigt die Fällung von Bayerit. Bei der Verwendung von Glycin z.B. ist als optimale Menge 0,25 Gew.-% bis 0,3 Gew.- % in der Vorlage, bezogen auf die Hydrolysevorlage, anzusehen, um einen möglichst phasenreinen Nordstrandit zu erhalten.

Die Aluminiumtrihydrate können ggf. in einem weiteren Schritt nach der Hydrolyse einem Alterungsprozess unterzogen werden. Die Alterung wird vorzugsweise bei Temperaturen zwischen 30°C und 100 °C, insbesondere zwischen 40°C und 60°C durchgeführt, vorzugsweise für einen Zeitraum von mehr als 1 h vorzugsweise mehr als 2 h. Unabhängig hiervon beträgt die Feststoffkonzentration der zu alternden Aufschlämmung (Slurry) bevorzugt 2 bis 17 Gew.-%, vorzugsweise 3 bis 5 Gew.-%, berechnet als Al₂O₃ und bezogen auf das Gesamtgewicht des Slurry.

Die in diesem Verfahren beschriebenen neuartigen Trihydrate zeichnen sich durch ein hohes Porenvolumen von größer 0,6, vorzugsweise größer 0,8 ml/g aus. Eine hohe Reinheit der Produkte ist durch die Herstellung, d.h. die Hydrolyse von gereinigtem Aluminiumalkoholat erreicht worden. Durch eine geringere Kristallitgröße als im herkömmlichen Bayerit sind die Trihydrate teildispergierbar und somit sehr gut zu pastösen Massen für die Extrudatherstellung verarbeitbar.

Alkalische Lösungen im Sinne der Erfindung sind wässrige Lösungen mit einem pH-Wert von größer 8, vorzugsweise 9 bis 12. Der alkalische ph-Wert der Hydrolysevorlage kann aber auch durch Zugabe geeigneter Substanzen, wie z.B. Ammoniak, Alkalilaugen oder pH-Stellmitteln erreicht werden.

Erfindungsgemäß werden zur Herstellung der Aluminiumtrihydrate Aluminuimalkoholate eingesetzt. Die Aluminiumalkoholate können z.B. nach dem Ziegler-Verfahren hergestellt sein, wobei vorzugsweise durch Filtration eine Aufreinigung stattfindet. Als Alumiuniumalkoholate können beispielsweise eingesetzt werden Cl-bis C24-Alkohole oder deren Gemische.

### Beispiele:

### Beispiel 1a (Vergleichsbeispiel)

457 g Wasser und 23 g 25%ige Ammoniaklösung wurden in einem 2 1-Dreihalskolben auf 30°C temperiert. In diese Vorlage wurden unter Rühren und Halten der Temperatur 400 g Aluminiumhexanolat tropfenweise innerhalb 1 Stunde hinzu gegeben. Es bildeten sich zwei nicht mischbare Phasen, eine obenstehende Alkoholphase und eine Tonerde/Wasser-Phase.

Nach Abdekantieren der Alkoholphase wurde die Tonerde/Wasser-Phase nach weiterer Zugabe von Wasser 5 h bei 30°C unter Rühren gealtert. Nach Entfernung des im Wasser gelösten Alkohols wurde ein pH-Wert zwischen 9,5 und 10,5 bestimmt und die Tonerdeaufschlämmung getrocknet.

### Beispiel 1b (Vergleichsbeispiel)

Zur Herstellung von Bayerit aus einer Salzlösung wurden 100 g Natriumaluminatlösung und 200 g Wasser in einem 1-1-Dreihalskolben auf 30°C temperiert. In diese Vorlage wurde unter Rühren und Halten der Temperatur Aluminiumsulfatlösung gegeben, bis ein pH-Wert von 10 erreicht war. Diese Zugabe erfolgte innerhalb von 45 Minuten. Daraufhin wurde auf 70°C erwärmt und unter Rühren und Halten der Temperatur 30 Minuten gealtert. Der aus der Filtration des warmen Reaktionsgemisches resultierende Filterkuchen wurde mit 1,5 1 Wasser gewaschen und getrocknet.

### Beispiel 2

Folgende Substanzen wurden analog zu Beispiel 1 a umgesetzt:

| | |
|---|---|
| 464 g | Wasser |
| 22,2 g | Ammoniaklösung (25%ig) |
| 1,4 g | Glycin in der Vorlage |
| 400 g | Aluminiumhexanolat |

Dabei wurden die zusätzliche Aminosäure bereits vor Reaktionsbeginn mit dem Wasser und der Ammoniaklösung im Dreihalskolben vorgelegt.

### Beispiel 3

Die Versuchsdurchführung und die eingesetzten Stoffe und Mengen entsprechen Beispiel 2. In Abweichung wurde die Tonerdeaufschlämmung vor der Trocknung 16 h bei 50°C. unter Rühren einer weiteren Alterung unterzogen.

### Beispiel 4 (Nordstrandit)

Die Versuchsdurchführung erfolgte analog zu Beispiel 1a mit folgenden Einsatzmengen:

| | |
|---|---|
| 232 g | Wasser |
| 11,1 g | Ammoniaklösung (25%ig) |
| 0,6 g | L-Asparaginsäure in der Vorlage |
| 200 g | Aluminiumhexanolat |

### Beispiel 5 (Vergleichsbeispiel, nicht erfindungsgemäß)

Die Versuchsdurchführung erfolgte analog zu Beispiel 1a mit folgenden Einsatzmengen:

| | |
|---|---|
| 232 g | Wasser |
| 11,1 g | Ammoniaklösung (25%ig) |
| 1,2 g | L-Asparaginsäure in der Vorlage |
| 200 g | Aluminiumhexanolat |

Der Versuch 5 wurde mit einer hoher L-Asparaginsäuremenge durchgeführt. Das erhaltene Produkt wies dem Ergebnis der Röntgenstrukturanalyse zu Folge eine Böhmitstruktur auf.

### Beispiel 6 (Nordstrandit))

Die Versuchsdurchführung erfolgte analog zu Beispiel 1a mit folgenden Einsatzmengen:

| | |
|---|---|
| 232 g | Wasser |
| 11,1 g | Ammoniaklösung (25%ig) |
| 0,6 g | L-Serin in der Vorlage |
| 200 g | Aluminiumhexanolat |

### Beispiel 7 (Gibbsit/Bayerit)

Die Versuchsdurchführung erfolgte analog zu Beispiel 1a mit folgenden Einsatzmengen:

| | |
|---|---|
| 232 g | Wasser |
| 11,1 g | Ammoniaklösung (25%ig) |
| 1,2 g | L-Leucin in der Vorlage |
| 200 g | Aluminiumhexanolat |

### Beispiel 8 (Gibbsit/Böhmit)

Die Versuchsdurchführung erfolgte analog zu Beispiel 1 a mit folgenden Einsatzmengen:

| | |
|---|---|
| 232 g | Wasser |
| 11,1 g | Ammoniaklösung (25%ig) |
| 0,6 g | L-Cystein in der Vorlage |
| 200 g | Aluminiumhexanolat |

### Beispiel 9 (Bayerit)

Die Versuchsdurchführung erfolgte analog zu Beispiel 1 a mit folgenden Einsatzmengen:

| | |
|---|---|
| 232 g | Wasser |
| 11,1 g | Ammoniaklösung (25%ig) |
| 0,6 g | L-Tyrosin in der Vorlage |
| 200 g | Aluminiumhexanolat |

### Beispiel 10 (Vergleichsbeispiel)

500 g 20%ige Ethylendiaminlösung wurden in einem 1 l-Dreihalskolben auf 30°C temperiert. In diese Vorlage wurden unter Rühren und Halten der Temperatur 12,5 g Aluminium in Pulverform portionsweise innerhalb einer halben Stunde zugegeben. Daraufhin wurde auf 50°C erwärmt und unter Halten der Temperatur 3 Tage schwach gerührt. Nach Zugabe weiterer 50 g Ethylendiamin wurde weitere 4 Tage schwach gerührt. Das Reaktionsgemisch wurde nun filtriert und der resultierende Filterkuchen nach erfolgter Waschung mit Wasser und Ethanol getrocknet.

Das Phasenverhalten wurde mittels STA bestimmt. Die Simultane Thermische Analyse (STA) umfasst die differentielle Thermoanalyse (DSC) und die Thermogravimetrie (TG). Die Aufheizrate betrug 10 K/min unter Luftspülung. Die Oberfläche der Aluminiumoxide wurde mittels N₂-Sorptionsanalytik nach BET bestimmt (DIN 66131) bestimmt. Das Porenvolumen und der mittlere Porenradius wurden mittels N₂-Sorption nach BJH (DIN 66134) bestimmt.

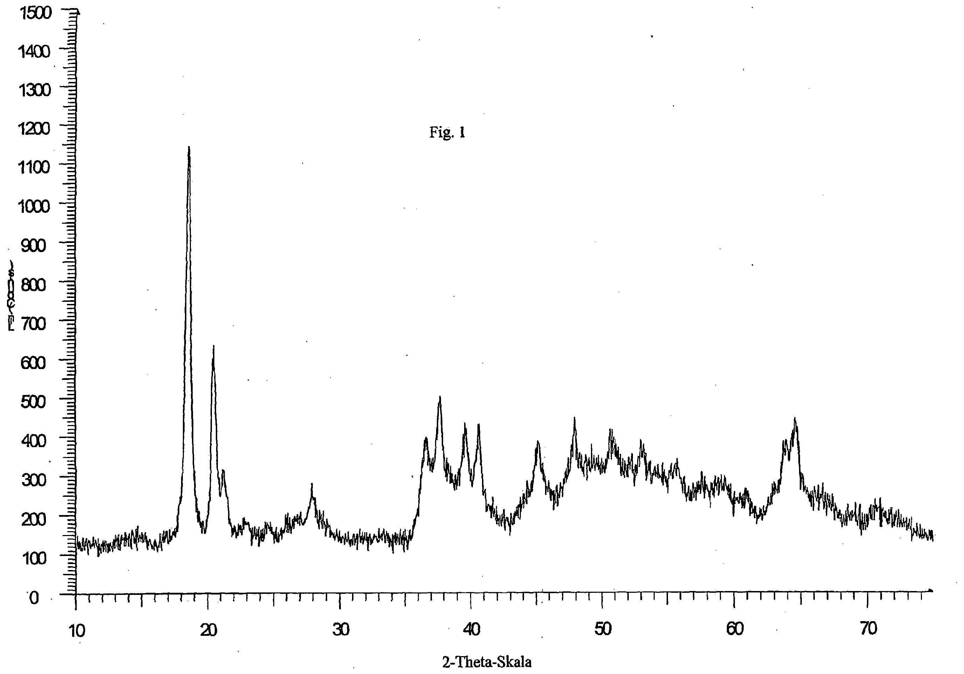

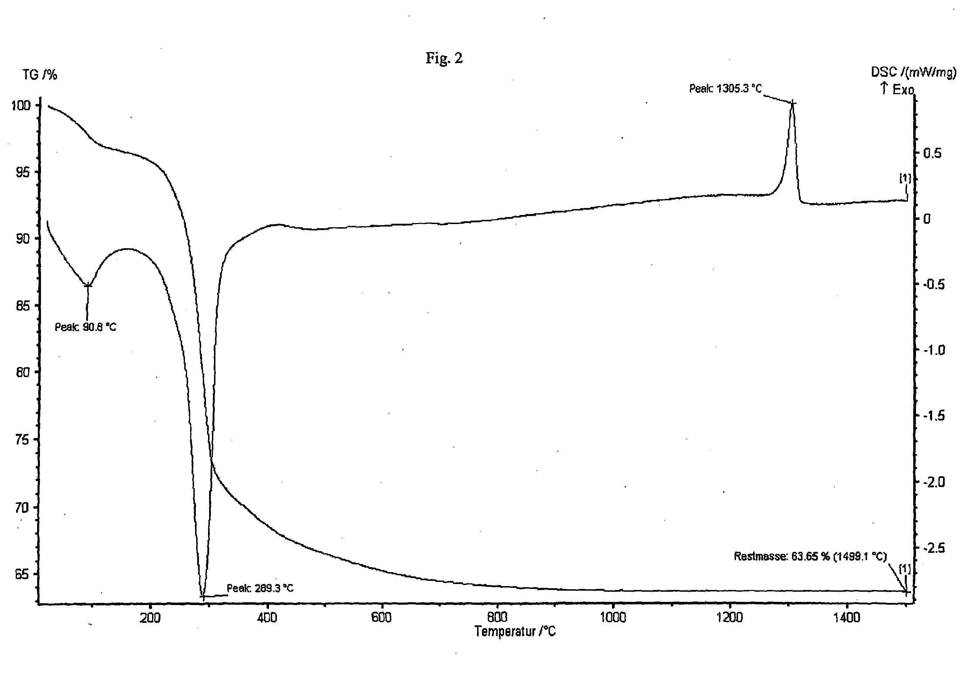

In Fig. 1 ist das Röntgenübersichtsdiffraktogramm (Drucker AXS, D5000, mit Scinüllationszähler und Cu_{Kα} Strahlung, 2θ = 6 bis 80°) und in Fig. 2 das DSC/TG von Beispiel 2 dargestellt.

**Tabelle 1**

| **Eigenschaften der Produkte der Beispiele 1 bis 10:** | | | | |
|---|---|---|---|---|
| # | **Phase lt. XRD** | **Oberfläche** | **Porenvolumen*** | **Mittl. Porenradius*** |
| | | m²/g | ml/g | nm |
| 1a | Bayerit | 277 | 0,39 | 3 |
| 1b | Bayerit | 311 | 0,37 | 3 |
| 2 | Nordstrandit mit wenig Bayerit | 272 | 0,89 | 6 |
| 3 | Nordstrandit mit wenig Bayerit | 286 | 1,04 | 7 |
| 4 | Nordstrandit mit wenig Bayerit | 266 | 0,81 | 6 |
| 5 | Böhmit | 293 | 0,51 | 3 |
| 6 | Nordstrandit mit wenig Bayerit | 267 | 0,76 | 6 |
| 7 | Amorpher Gibbsit mit wenig Bayerit | 269 | 0,70 | 5 |
| 8 | Amorpher Gibbsit mit wenig Bayerit und Böhmit | 303 | 0,63 | 4 |
| 9 | Bayerit | 264 | 0,71 | 2 |
| 10 | Nordstrandit (Hauschild) | 214 | 0,25 | 2 |

| | | | | |
|---|---|---|---|---|
| * Die Aktivierungstemperatur betrug 550°C für 3 Stunden. | | | | |

## Patentansprüche

1. Verfahren zur Herstellung von Aluminiumtrihydraten durch Hydrolyse von Aluminiumalkoholaten bei 0°C bis 60°C in wässriger Lösung mit einen pH-Wert von größer 8 unter Zusatz organischer Verbindungen mit 2 bis 24 Kohlenstoffatomen bzw. deren Salzen, welche jede für sich genommen zumindest eine Aminogruppe und zumindest eine Carboxylgruppe aufweisen.

2. Verfahren gemäß Anspruch 1 **dadurch gekennzeichnet, dass** die organische Verbindungen eine Aminogruppe in 2, 3 oder 4 Stellung, vorzugsweise in 2 Stellung, zur Carboxylgruppe aufweist.

3. Verfahren einem der vorhergehenden Ansprüche, **dadurch gekennzeichnet, dass** die organische Verbindung eine Aminosäure der allgemeinen Formel I ist 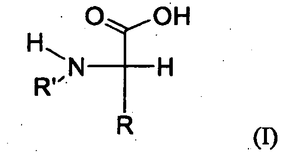 mit
R gleich H oder ein Kohlenwasserstoffrest mit 1 bis 20 Kohlenstoffatomen mit ggf. einer oder mehreren funktionelle Gruppen, und
R' gleich H, oder C1- bis C5-Alkyl mit ggf. einer oder mehreren funktionelle Gruppen ist.

4. Verfahren gemäß einem der vorhergehenden Ansprüche, **dadurch gekennzeichnet, dass** die organische Verbindung weiterhin zumindest eine Hydroxylgruppe aufweist.

5. Verfahren gemäß einem der Ansprüche 1 bis 3, **dadurch gekennzeichnet, dass** die organische Verbindung L-Serin, Asparginsäure, Glycin und/oder L-Leucin ist.

6. Verfahren gemäß einem der vorhergehenden Ansprüche, **dadurch gekennzeichnet, dass** die organische Verbindung zu 0,01 bis 1 Gew.-%, vorzugsweise zu 0,2 bis 0,5 Gew.-%, bezogen auf die Hydrolysevorlage, vorliegt.

7. Verfahren gemäß einem der vorhergehenden Ansprüche, **dadurch gekennzeichnet, dass** die hergestellten Aluminiumtrihydrate eine Nordstrandit- oder Gibbsit-Struktur aufweisen.

8. Verfahren gemäß einem der vorhergehenden Ansprüche, **dadurch gekennzeichnet, dass** die Hydrolyse bei Temperaturen zwischen 20°C und 60°C, vorzugsweise zwischen 30°C und 40°C durchgeführt wird.

9. Verfahren gemäß einem der vorhergehenden Ansprüche, **dadurch gekennzeichnet, dass** Aluminiumalkoholate zu Hydrolysevorlage in einem Gewichtsverhältnis von 1 zu größer 0,5, vorzugsweise 1 zu 0,7 bis 1 zu 3 eingesetzt werden.

10. Verfahren gemäß einem der vorhergehenden Ansprüche, **dadurch gekennzeichnet, dass** in einem weiteren Schritt nach der Hydrolyse die Aluminiumverbindung einer hydrothermalen Alterung, vorzugsweise über zumindest 1 h, unterzogen wird.

11. Verfahren gemäß Anspruch 10, **dadurch gekennzeichnet, das** die hydrothermale Alterung bei Temperaturen zwischen 30°C und 100 °C, vorzugsweise zwischen 40°C und 60°C, durchgeführt wird.

12. Verfahren gemäß einem der Ansprüche 10 oder 11, **dadurch gekennzeichnet, dass** die hydrothermale Alterung in einer Feststoffaufschlämmung mit einer Feststoffkonzentration von 2 bis 25 Gew.-%, vorzugsweise 3 bis 5 Gew.-%, berechnet als Al₂O₃ und bezogen auf das Gesamtgewicht der Feststoffaufschlämmung, durchgeführt wird.

## Claims

1. Process for producing aluminium trihydrates by hydrolysis of aluminium alcoholates at 0 °C to 60 °C in aqueous solution at a pH above 8 with addition of organic compounds with 2 to 24 carbon atoms and/or their salts which, each taken separately, comprise at least one amino group and at least one carboxyl group.

2. Process according to claim 1 **characterised in that** the organic compounds exhibit an amino group in position 2, 3 or 4, preferably in position 2, to the carboxyl group.

3. Process according to one of the preceding claims **characterised in that** the organic compound is an amino acid with the general formula I 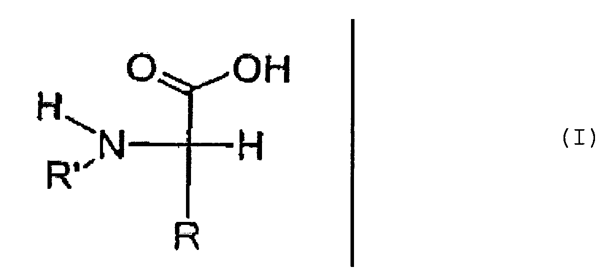 with
R equal H or a hydrocarbon radical with 1 to 20 carbon atoms with optionally one or more functional groups and
R' equal H or C1 to C5 alkyl with optionally one or more functional groups.

4. Process according to one of the preceding claims **characterised in that** the organic compound additionally exhibits at least one hydroxyl group.

5. Process according to one of claims 1 to 3 **characterised in that** the organic compound is L-serine, aspartic acid, glycine and/or L-leucine.

6. Process according to one of the preceding claims **characterised in that** the organic compound is present in an amount of 0.01 to 1 % by wt., preferably 0.2 to 0.5 % by wt., based on the hydrolysis product.

7. Process according to one of the preceding claims **characterised in that** the aluminium trihydrates produced exhibit a norstrandite or gibbsite structure.

8. Process according to one of the preceding claims **characterised in that** the hydrolysis is carried out at temperatures between 20 °C and 60 °C, preferably between 30 °C and 40 °C.

9. Process according to one of the preceding claims **characterised in that** aluminium alcoholates are used in a weight ratio to the hydrolysis product of 1 to more than 0.5, preferably 1 to 0.7 to 1 to 3.

10. Process according to one of the preceding claims **characterised in that,** in a further step following hydrolysis, the aluminium compound is subjected to hydrothermal aging, preferably above at least 1 h.

11. Process according to claim 10 **characterised in that** the hydrothermal aging is carried out at temperatures between 30 °C and 100 °C, preferably between 40 °C and 60 °C.

12. Process according to one of claims 10 or 11 **characterised in that** the hydrothermal aging is carried out in a solids suspension with a solids concentration of 2 to 25 % by wt., preferably 3 to 5 % by wt., calculated as Al₂O₃ and based on the total weight of the solids suspension.

## Revendications

1. Procédé de production de trihydrates d'aluminium par hydrolyse d'alcoolates d'aluminium à une température allant de 0°C à 60°C en solution aqueuse avec un pH de plus de 8 en ajoutant des composés organiques ayant 2 à 24 atomes de carbone ou leurs sels, qui présentent, chacun indépendamment, au moins un groupe amino et au moins un groupe carboxyle.

2. Procédé selon la revendication 1, **caractérisé en ce que** les composés organiques présentent un groupe amino en position 2, 3 ou 4, de préférence en position 2 par rapport au groupe carboxyle.

3. Procédé selon l'une des revendications précédentes, **caractérisé en ce que** le composé organique est un acide aminé de formule générale I 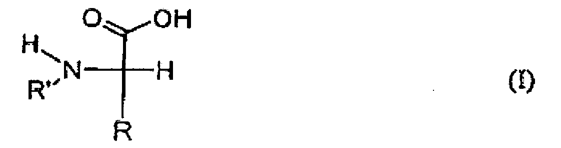 où
R représente H ou un radical hydrocarbure ayant 1 à 20 atomes de carbone avec, le cas échéant, un ou plusieurs groupes fonctionnels et
R' représente H, un groupe alkyle en C₁ à C₅ avec, le cas échéant, un ou plusieurs groupes fonctionnels.

4. Procédé selon l'une des revendications précédentes, **caractérisé en ce que** le composé organique présente également au moins un groupe hydroxyle.

5. Procédé selon l'une des revendications 1 à 3, **caractérisé en ce que** le composé organique est la L-sérine, l'acide asparaginique, la glycine et/ou la L-leucine.

6. Procédé selon l'une des revendications précédentes, **caractérisé en ce que** le composé organique est présent en une teneur allant de 0,01 à 1 % en poids, de préférence de 0,2 à 0,5 % en poids, par rapport à la charge d'hydrolyse.

7. Procédé selon l'une des revendications précédentes, **caractérisé en ce que** les trihydrates d'aluminium préparés présentent une structure de nordstrandite ou de gibbsite.

8. Procédé selon l'une des revendications précédentes, **caractérisé en ce que** l'hydrolyse est effectuée à des températures situées entre 20°C et 60°C, de préférence entre 30°C et 40°C.

9. Procédé selon l'une des revendications précédentes, **caractérisé en ce que** les alcoolates d'aluminium sont mis en oeuvre à un rapport en poids de 1 sur plus de 0,5, de préférence de 1 sur 0,7 à 1 sur 3 par rapport à la charge d'hydrolyse.

10. Procédé selon l'une des revendications précédentes, **caractérisé en ce que,** dans une autre étape après l'hydrolyse, le composé aluminium est soumis à un vieillissement hydrothermal, de préférence pendant au moins 1 h.

11. Procédé selon la revendication 10, **caractérisé en ce que** le vieillissement hydrothermal est effectué à des températures situées entre 30°C et 100°C, de préférence entre 40°C et 60°C.

12. Procédé selon l'une des revendications 10 ou 11, **caractérisé en ce que** le vieillissement hydrothermal est effectué dans une suspension de matières solides avec une concentration en matières solides de 2 à 25 % en poids, de préférence de 3 à 5 % en poids, calculé sous forme de Al₂O₃ et par rapport au poids total de la suspension de matières solides.
